# EUROPEAN PATENT SPECIFICATION

(11) **EP 3 935 022 B1**
(45) Date of publication and mention of the grant of the patent: **10.06.2026**
(21) Application number: 20732697.6
(22) Date of filing: 04.03.2020
(51) Int. Cl.: C03C 17/32, B29C 73/00, C03C 17/00, C09D 5/00, G01N 21/896

(54) **REPAIRING AN OUTER SURFACE OF A GLASS PRODUCT**
REPARATUR EINER AUSSENFLÄCHE EINES GLASPRODUKTS
RÉPARATION D'UNE SURFACE EXTÉRIEURE D'UN PRODUIT EN VERRE

(30) Priority: 06.03.2019 US 201916294441
(43) Date of publication of application: 12.01.2022
(73) Proprietor: Owens-Brockway Glass Container Inc., Perrysburg, OH 43551 (US)
(72) Inventor: CHISHOLM, Brian, J., Sylvania, OH 43560 (US)
(74) Representative: Blumbach · Zinngrebe Patentanwälte PartG mbB
(86) International application number: PCT/US2020/020865
(87) International publication number: WO 2020/180915

(56) References cited:
- CN-A- 105 223 209
- CN-A- 107 607 549
- CN-B- 103 234 979
- GB-A- 2 073 050
- JP-A- S63 101 465
- US-A1- 2005 011 603
- US-A1- 2006 000 968

## Description

### Technical Field

This patent application discloses treatment of glass products. More particularly, this application discloses repair of glass products.

### Background

This application relates to Patent US 10,752,538 and Patent Application US 2020/0283332 A1, both which are assigned to the applicant hereof.

Many types of glass products may benefit from a process of repairing outer surfaces of the glass products. For example, glass container manufacturing is a process to produce glass containers formed from a wide variety of glasscompositions. Once formed, the glass container is highly durable, recyclable, and reusable without a significant loss of quality. One benefit of the glass container is that it can be returned and/or reused many times by various users. Sometimes, after one or more uses of the glass container, it is possible that the glass container can become worn, scratched, damaged, or the like, such that it is no longer useful for reuse. Particular wear areas may occur at any contacts points on the glass container.

GB 2 073 050 A , US 2005/011603 A1 and JP S63 101465 A disclose methods of repairing damages on glass articles by means of applying a resin on the damaged areas and then curing the same.

### Brief Summary of the Disclosure

The present disclosure embodies a number of aspects that can be implemented separately from or in combination with each other.

In accordance with one aspect of the disclosure, there is provided an apparatus for repairing an outer surface of a glass product, the apparatus comprising: an imager positioned to capture one or more images of the glass product; an image processor in communication with the imager, to process the one or more images of the glass product to identify a repairable portion of the glass product; and a printer in communication with the image processor, to apply a durable material to the repairable portion of the glass product.

In accordance with another aspect of the disclosure, there is provided a method of repairing an outer surface of a glass product, the method comprising: imaging the glass product to capture one or more images of the glass product to identify repairable portion of the glass product; processing the captured one or more images to identify repairable portion of the glass product; and printing a durable material at the repairable portion of the glass product.

### Brief Description of the Drawings

The disclosure, together with additional objects, features, advantages and aspects thereof, will be best understood from the following description, the appended claims and the accompanying drawings, in which:
FIG. 1 is a side view of a glass container in accordance with an illustrative embodiment of the present disclosure;
FIG. 2 is schematic side view of an apparatus for repairing the glass container of FIG. 1 in accordance with an illustrative embodiment of the present disclosure; and
FIG. 3 schematically depicts a method for repairing the glass container of FIG. 1 in accordance with an illustrative embodiment of the present disclosure.

### Detailed Description

A general object of the present disclosure, in accordance with one aspect thereof, is to provide an apparatus that can repair a glass product, for example, to repair a repairable portion. As used herein the term "repairable portion" includes a wear area, cosmetic commercial variations, and the like, of the glass product. Another general object of the present disclosure is to provide a method of repairing the glass product, for example, to repair the repairable portion of the glass product. As used herein, the term "repairing" includes fixing, mending, refreshing, restoring, and the like.

Glass products may be manufactured with unintentional cosmetic commercial variations, such as minor chips or improperly molded portions in external surfaces of the products. Accordingly, for example, glass containers are inspected with optical inspection equipment to identify unacceptable commercial variations for immediate recycling of the glass containers and tolerable variations that may be primarily cosmetic in nature and repairable.

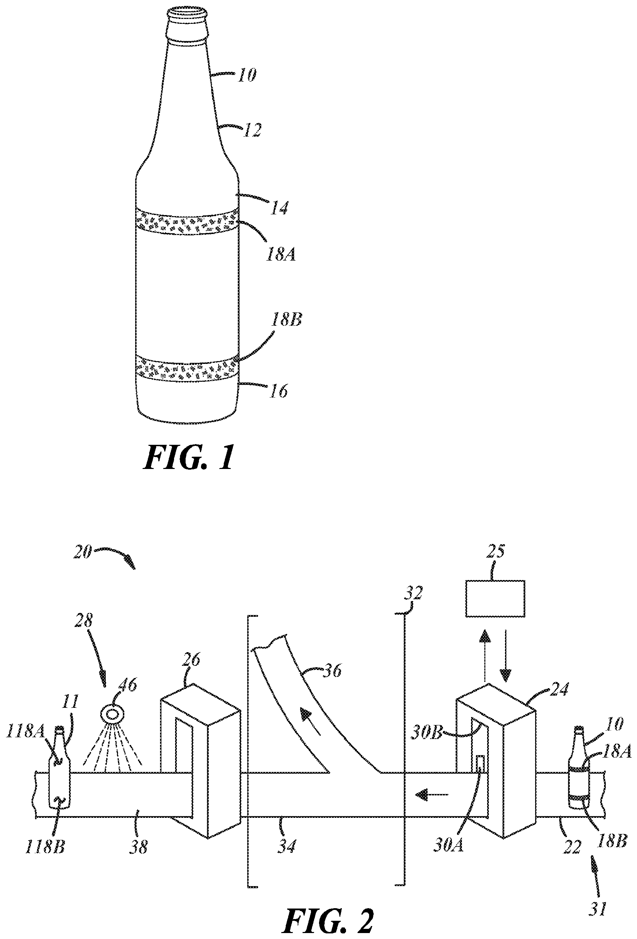

Also, as discussed briefly in the background, glass containers can be manufactured and reused repeatedly. Reusing the glass containers in this way extends the useful life of the glass containers, saves costs, and reduces waste products. One illustrative reusable container includes a glass bottle or container 10 depicted in FIG. 1. The glass container 10 could be reused 10-25 times, for example, being refilled with various contents each time, before the glass container 10 reached the end of its useful life and was taken out of service.

However, with each reuse, the glass container 10 is subject to possible wear, including damage, cracking, chipping, scuffing, scratching, or the like. Particularly vulnerable portions for wear are any contact surfaces of the glass container 10 as it is processed or otherwise used. Additionally, the widest dimensions of any given glass container are most likely to contact corresponding widest dimensions of other glass containers, or shelves, boxes, carts, belts, or other similar support surfaces as the glass container 10 is manufactured, transported, displayed, or the like for its sale.

Although the degree to which the glass container 10 may experience such wear can vary, any wear can cause potential consumers to avoid reuse of the glass container 10. For example, even slight scuffing can cause beverage makers not to repackage their contents in the glass container 10. However, the slightly scuffed glass container 10 may otherwise be structurally acceptable for reuse. This creates a potential situation where the glass container 10 is prematurely taken out of service, before the end of its useful life.

As will be discussed in greater detail below, the present disclosure provides an apparatus and method to capture images of glass products and process the images to determine if the glass products include repairable portions and identify the severity and/or locations of the repairable portions, print durable material on the glass products to repair the repairable portions, cure the durable material, and return the glass products to channels of trade for reuse.

The glass container 10 of FIG. 1 may be a typical beverage bottle, having a neck 12 and a body 14 having an external or outer surface 16. In the illustrated embodiment, the body 14 establishes the widest dimension of the glass container 10; therefore, the body 14 may be the most susceptible to wear as the glass container 10 is manufactured, filled, transported, displayed, sold, consumed, or otherwise handled. In the illustrated example, the presently disclosed glass product is round in transverse cross section and having a round, or at least arcuate, outer surface. It will be appreciated by those of ordinary skill in the art, however, that the presently disclosed glass product may be of some other shape in transverse cross section, including rectangular, oval, lobed, or any other shape(s), and having any non-round or non-arcuate outer surface, suitable for glass product manufacturing operations.

More specifically, two repairable portions 18A, B are depicted in FIG. 1 around a circumference of the container 10. As one example, these repairable portions 18A, B could have come into contact with any variety of other objects that can cause them to crack, scuff, scratch, chip, or the like. The wear may impair the aesthetic appeal of the container 10. Although FIG. 1 depicts the example glass container 10, which may be composed of soda-lime-silica glass or any glass suitable for use with glass container manufacturing and with the subject matter of the present disclosure, it will be appreciated that the glass product of the present disclosure, could be formed of any type of glass composition suitable for use with the subject matter of the present disclosure. Additionally, the glass container 10 and/or its composition may or may not include photoinitiators, urethane acrylate resins, cycloaliphatic compounds, nanoparticles, adhesives, leveling agents, metallic inks, embossing, aqueous compositions, or the like, being hydrolyzed or unhydrolyzed.

In order to repair the repairable portions 18A, B, FIG. 2 depicts an apparatus 20 for repairing outer surfaces of the glass container 10, more specifically, for repairing the repairable portions 18A, B. In general, the apparatus 20 may include a material handler or movable support 22, one or more of any light sources (not separately shown) suitable to shine diffuse and/or concentrated light on the container 10 to facilitate imaging thereof, a light receiver or imager 24, one or more image processors 25, a printer 26, and a curing station 28.

The moveable support 22 can include one or more belts, conveyors, platforms, turntables, or the like to move the glass container 10 through the various parts of the apparatus 20 or move the container 10 at the imager 24, the printer 26, and/or the curing station 28. Alternatively, it will be appreciated that the moveable support 22 could include one or more portions that are not moveable, but rather are stationary, and other parts of the apparatus 20 could move relative to the glass container 10 so that the imager 24, the printer 26, and/or the curing station 28 move relative to the stationary container 10 and moveable support 22.

The moveable support 22 can include a first portion 31 that is upstream of the imager 24 and a second portion 32 that is downstream of the imager 24. The second portion 32 can be forked so that the glass container 10 is routed either on a first path 34 between the imager 24 and the printer 26 or on a second path 36 away from the printer 26. As shown in FIG. 2, the second portion 32 is upstream of the printer 26. If the glass container 10 does have repairable portions 18A, B, it can be routed along the first path 34 for repair. If the glass container 10 does not contain repairable portions 18A, B, or the repairable portions 18A, B are not of a sufficient degree of wear to warrant a material application by the printer 26, the glass container 10 can be routed along the second path 36 to be reused without repairing by the printing process.

It will be appreciated that containers without the repairable portions 18A, B could also be routed along the first path 34 such that when these containers encounter the printer 26, no printing is needed or occurs. In other words, the apparatus 20 could be arranged so that containers with or without the repairable portions 18A, B are routed along the first path 34 to be reused and the printer 26 only prints on containers with the repairable portions 18A, B.

Additionally or alternatively, it will be appreciated that containers with wear that is too substantial to be repaired can also considered containers without the repairable portions 18A, B. These containers could be routed along the second path 36 to be discarded or rejected. In this case, the second path 36 is a discard path so that any containers routed along this path are not reused. As will be appreciated, various containers can be routed along various paths.

The moveable support 22 can also include a third portion 38 that is downstream of the second portion 32 and that extends away from the printer 26. Once the glass container 10 has been sufficiently repaired by the printer 26, it can be routed along the third portion 38 to be reused.

In one particular aspect, the glass container 10 with a repairable portion is a first glass container or product. The apparatus 20 can also process a second glass container without any repairable portions and that can be reused. The apparatus 20 can also process a third glass container without any repairable portions and that cannot be reused and/or repaired. In this aspect, the first and second glass containers can be routed along the first portion 31, the first path 34 of the second portion 32, and the third portion 38 to be reused. The third glass container can be routed along the first portion 31 and the second path 36 of the second portion 32 to be discarded. It will be appreciated that any of the first, second, or third glass containers could also be a first, second, or third group of glass containers, in which each of the first, second, or third groups of glass containers has all of the characteristics of the first, second, or third glass containers, respectively, because the apparatus 20 can process a plurality of glass containers having all or any of the features described herein.

The imager 24 may include any suitable device to sense light. For example, the imager 24 may include one or more of an image sensor, for instance, a charge-coupled device (CCD), a complementary metal-oxide-semiconductor (CMOS) device, or any other suitable image sensor(s). In another example, the imager 24 may include a photodiode device, a photoresistor device, or any other suitable photodetector device, other suitable camera, or suitable imaging device.

The imager 24 can include one or more cameras 30A, B so that the imager 24, with its various parts, is positioned 360° about a longitudinal axis of the container 10. As shown in FIG. 2, the moveable support 22 may translate along its longitudinal axis through the imager 24. The one or more cameras 30A, B may be positioned within the interior of the imager 24 and around the moveable support 22 in order to take one or more images of the glass container 10 from various positions. This enables images to be taken of the glass container 10 from anywhere about the glass container 10, including around its outer surface 16 and/or circumference, in order to view and analyze any possible repairable portions on the glass container 10. While two cameras 30A, B are shown, any number of cameras is possible, including three, four, five, six, or more. Further, multiple cameras can be positioned at various heights and act in a sequential order in order to take images about the glass container 10.

It is also possible for the imager 24 to include only one camera. In order for the only one camera to take images 360° about the glass container 10, the moveable support 22 within the imager 24 may contain a rotator portion (not depicted). The rotator portion can move or spin when the glass container 10 is positioned thereon so that the only one camera can take images of any location on the glass container 10. The rotator can include various components, such as one or more motors, asynchronous linear belts, swivels, turntables, or the like to cause rotation of the container 10 in front of the camera. With any of the cameras discussed herein, it is also possible for them to be moveable, possibly remotely moveable, such that they can be positioned in different locations at different times for better images of the glass container 10.

Accordingly, the imager 24 may include one or more line-scan cameras, which may be suited to capture an inspection area, for example, of a rotating container 10, or may include still image capture cameras, for instance, which may be suited to capture an inspection area of a stationary or translating container 10, where static images are processed so that the images are combined to produce a full image of the container outer surface by a process sometimes called stitching images together.

The image processor 25 is coupled to the imager 24 and receives signals therefrom that may be indicative of light detected by sensors of the imager 24. From these signals, the processor 25 may identify one or more repairable portions of the outer surface of the container 10, determine whether the repairable portions are within or outside of acceptable limits or thresholds. Different thresholds may be used after a determination is made as to a type of repairable portion, for example, a scratch, scuff, commercial variation, or the like. The processor 25 may send a signal to a reject mechanism to remove from further processing a container for which one or more unacceptable commercial variations or unrepairable portions have been detected. The processor 25 also may provide an output to a display for monitoring by plant personnel, or for any other suitable purpose.

The processor 25 may be any suitable information, data, and/or signal processor and may include, for example, one or more microprocessors, microcontrollers, discrete logic circuits having logic gates for implementing logic functions on data signals, application specific integrated circuits with suitable logic gates, programmable or complex programmable logic devices, programmable or field programmable gate arrays, and/or any other suitable type of electronic processing device(s). In one example, the processor 25, and perhaps the entire apparatus 20, may be part of a glass container inspection system (not separately shown) including computer memory (not separately shown) coupled to the processor 25, and one or more interfaces (not separately shown) coupled to the processor 25 and coupled to one or more input devices (e.g. image sensors, position sensors, user interfaces, etc.) and/or one or more output devices (e.g. light sources, material handlers, displays, etc.). Of course, the inspection computer further may include any ancillary devices, for example, clocks, internal power supplies, and the like (not shown). The processor 25 may process data and execute instructions that provide at least some of the functionality for the presently disclosed apparatus. As used herein, the term "instructions" may include, for example, control logic, computer software and/or firmware, programmable instructions, or other suitable instructions.

The computer memory may include any computer readable medium or media configured to provide at least temporary storage of at least some data, data structures, an operating system, application programs, program modules or data, and/or other computer software or computer-readable instructions that provide at least some of the functionality of the presently disclosed apparatus 20 and that may be executed by the processor 25. The data, instructions, and the like may be stored, for example, as look-up tables, formulas, algorithms, maps, models, and/or any other suitable form. The computer software may include any computer vision and image processing software suitable for detecting commercial variations and repairable portions of glass containers via edge detection, blob detection, and/or other feature detection methodologies. For instance, the software may include sidewall analysis (SWA) software, which is known to those of ordinary skill in the art and may be improved with any of the presently disclosed methodologies or method steps.

After moving past the imager 24, the glass container 10 can proceed to the printer 26, for instance, via linear translation along the movable support 22. Also, the movable support 22 may include a rotator (not separately shown) such that the container 10 is rotated in front of a print head or the like of the printer 26 to apply the material.

The printer 26 is in communication with the imager 24 so that information received and analyzed by the imager 24 can be sent to the printer 26. This communication can occur wirelessly with wireless systems, networks, antenna, and/or signals therebetween, through a wired connection, or various other known communication methods between these parts. The imager 24, image processor 25, and/or printer 26 can be configured to communicate wirelessly according to one or more wireless protocols, including short range wireless communication (SRWC) such as any of the IEEE 802.11 protocols, WiMAX, ZigBee^{™}, Wi-Fi direct, Bluetooth^{™}, or near field communication (NFC).

The printer 26 can be downstream of the imager 24 so that the printer 26 can receive the information and, subsequently, communicate the information to the printer 26 before the glass container 10 arrives at the printer 26. In one aspect, the imager 24 identifies the repairable portions 18A, B of the glass container 10 and, thereafter, the moveable support automatically routes the glass container 10 downstream and to the printer 26 to repair the repairable portions 18A, B.

Although the processor 25 in FIG. 2 is shown in communication with the imager 24, it could also be in communication with any part of the apparatus 20 including the movable support 22, the printer 26, and/or the curing station 28. Of course, it is also possible that other processors (not depicted), including remote processors, can also be in communication and/or control any of the parts of the apparatus 20 and provide, or contribute to, any of the functionality discussed herein. The processor 25 can have similar wireless or wired communication as discussed above for the imager 24 and printer 26.

The processor 25 can output instructions to direct movement, imaging, and/or printing of the glass container 10. In particular, the processor 25 can analyze a degree of wear of each repairable portion 18A, B. This imaging analysis can be tuned to be ultra-sensitive to scuffing and wear, or de-tuned to allow more aggressive scuffing and wear to be accepted. In any event, the processor 25 and/or the imager 24 can determine if the degree of wear of the repairable portions 18A, B is sufficiently high to warrant the material application by the printer 26. In addition, the processor 25 can also analyze a location on the glass container 10 of each repairable portion 18A, B. By analyzing both the degree of wear and/or commercial variation that make up the repairable portions and the location of the repairable portions 18A, B, the processor 25 can send information to the printer 26 regarding where to repair the glass container 10 and how much of the repair material should be added to each location for the repair. If the processor 25 determines that printing is needed by the printer 26, the apparatus 20 can automatically route the glass container 10 along the first path 34.

Additionally, the processor 25 or any other processors in communication with the parts of the apparatus 20 can cause or direct automatic routing of the glass container 10. For example, the processor 25 can be in communication with the movable support 22, such that the processor 25 causes the moveable support 22 to direct the glass container 10 to the printer 26 when the processor 25 determines that printing is appropriate. In order to do so, the moveable support 22 can also include various switches, levers, belts, gates, actuators, or the like to route the glass container 10 to either of the first or second paths 34, 36. It will be appreciated by one of ordinary skill in the art that any part of the apparatus 20 that is controlled automatically could also be controlled manually, for example, by an operator.

The glass container 10 can be routed to the printer 26 for printing of the durable material on the container 10. The printer 26 may be configured such that the container 10 rotates in front of a digital print head where the repair material is applied. The printer 26 can receive the information from the imager 24 and/or the processor 25 so that it can automatically know where and how much of the repair material to apply to the glass container 10. The printer 26 can include a digital inkjet machine, for example, to print one or more durable materials in order to repair the glass container 10. Some illustrative durable materials may include a colored or colorless ultraviolet (UV) curable varnish, and/or other UV curable materials that could be developed to improve the repair or add enhanced properties, including: dipropylene glycol diacrylate, 2,4,6 trimethylbenzoyldiphenylphosphine oxide, trimethylolpropane ethoxylated, triacrylate, benzene, (1-methylethenyl) homo-polymer, oligomer, monomer, polymer, polyester, polycarbonate, epoxy, urethane, silicone, styrene, vinyl, nylon, acrylic, acrylate, diacrylate, triacrylate, tetraacrylate, pentacrylate, allylic monomers, multifunctional acrylate oligomer, mutilfunctional acrylate monomer, monofunctional acrylate monomer, acrylated polyester, acrylated epoxy, acrylated urethane, acrylated silicone, acrylated polyester, acrylated oils, thiolenes, plasticizing diluents, acrylonitrile butadiene styrene, acrylonitrile styrene acrylate, co-polyesters, fluorinated ethylene propylene, ethylene acrylic acid, polyetherimide, polypropylene, polylactic acid, polyethylene co trimethylene terephthalate, polyethylene terephthalate modified with glycol and various photoinitiators, additives, and/or ar-(2-hydroxy-2-methyl-1-oxopropyl) derivatives. In any case, the durable material should be able to adhere to the glass and have a viscosity suitable to flow into and fill scratches or other voids and be self-leveling with the outer surface of the glass product.

The durable material applied can have a variety of desirable properties for the glass container to be reused. For example, the material can have a durability sufficient such that it can withstand processing, for instance, washing, disinfecting, drying, or other processing steps, as well as distribution through the retail trade and meet the needs of the related recycle stream. For glass, the material can be similarly transparent, colored, smooth, durable, hard, or the like.

The material that is printed by the printer 26 onto the glass container 10 can be printed as a single layer, or via a multi-layer build-up process, layer upon layer, in order to repair the repairable portions 18A, B. Through printing, any type of repairable portion can be partially or fully filled in to create a portion of the glass container 10 that appears like new. While it is, of course, possible to apply the material for the repair to the glass container 10 by a variety of methods, the printer 26 prints the material onto the glass container 10, and may not apply the material by bulk spraying, rolling, brushing, pouring, a combination thereof, or the like. One of ordinary skill in the art will appreciate that at least a portion of the material applied to repair the glass container 10 could be applied by any of the above methods, including a controlled micro spraying technique to limit and accurately apply the material to the repairable portion.

Additionally, while it is possible to inspect and/or apply the material to the glass container 10 directly following manufacturing of the container 10, before it has even undergone one use by a consumer, it is not necessary for the glass container 10 to be inspected and printed thereon at this stage. It is more likely that the glass container 10 will have undergone at least one use, and be ready for a reuse, before the glass container 10 is processed as discussed in this disclosure.

The material in the printer 26 can be an ultraviolet (UV) curable composition so that it can also be cured by the apparatus 20. For example, it may be necessary to cure the material in the printer 26 after the material's application or printing.

Accordingly, the apparatus 20 can also include the curing station 28, which may include a UV light source 46, so that the durable material printed on the glass container 10 by the printer 26 can be easily and readily cured or set for reuse of the glass container 10. FIG. 2 depicts an illustrative stand-alone UV light source 46, but the light source 46 could include any quantity and any type known in the art, including being enclosed in a structure in order to facilitate curing. Once the material of the printer 26 is appropriately applied to the glass container 10 and cured, the glass container 10 will contain repaired portions 118A, 118B as illustrated in FIG. 2. With the repaired portions 118A, 118B, a repaired glass container 11 is ready for reuse.

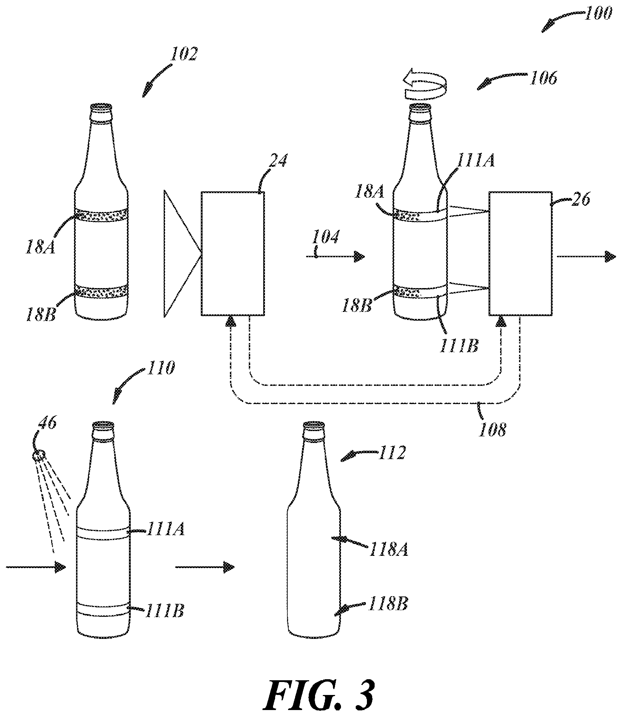

FIG. 3 depicts a method 100 of operation of the apparatus 20 of FIG. 2 with the glass container 10 of FIG. 1. Accordingly, any details of either of the glass container 10 or the apparatus 20 are incorporated into the method 100 and may not necessarily be repeated here. The method 100 includes a step 102 of inspecting the glass container 10 with the imager 24 to identify the repairable portions 18A, B of the glass container 10. As above, each repairable portion 18A, B is around the widest dimension of the glass container 10, although any repairable portion can exist in any location on the glass container 10. The inspecting step 102 can include inspecting 360° about the glass container 10 with the imager 24. The imager 24 can include a variety of parts, including the one or more cameras 30A, B discussed above. The one or more cameras 30A, B can take one or more images of the glass container 10 in order to analyze the glass container 10 for scratches, scuffs, chips, cracks, a combination thereof, or any similar wear or commercial variation that can impair the function or appearance of the glass container 10.

As part of the inspecting step 102, the imager 24 and/or the processor 25 can analyze the degree of wear of the repairable portions 18A, B. The imager 24 can also analyze the location on the glass container 10 of the repairable portions 18A, B.

After identifying the repairable portions 18A, B, the method can include a step 104 of automatically routing the glass container 10 to the printer 26. The printer 26 can include a digital inkjet machine that may print a UV curable durable material 111A, B so that the durable material 111A, 111B is applied to the repairable portions 18A, 18B.

Before or after the automatically routing step 104, the method can include a step 108 of the imager 24 and/or processor 25 communicating with the printer 26 to send or transmit the information about the degree of wear and the location of wear, respectively, so that the printer 26 can apply, to the location of the repairable portion, the proper amount of UV curable composition 111A, B which can be printed or applied in either a single layer or multiple layer application. Subsequently in a step 110, the UV curable composition 111A, B is cured. In one aspect, the curing step occurs with a UV light source 46 directed onto the UV curable composition 111A, B on the glass container 10.

After the curing step 110, the method may result in a repaired glass product/container 112 in which the repairable portions 18A, B have been repaired and into repaired portions 118A, B, respectively. The glass container 10 with the repaired portions 118A, B can be routed away from the printer 26 and returned to the supply stream for reuse.

In another embodiment, wherein multiple layers of the durable material 111A, B may be applied, the method may include curing each layer of the multiple layers such that the container 10 is looped from a location downstream of the curing step 110 back to a location upstream of the printing step 106. In a further embodiment, wherein multiple layers of the durable material 111A, B may be applied, the method may include curing all of the multiple layers at once or sequentially printing and curing the multiple layers while the glass container is process by the printing step 106. In an additional embodiment, wherein multiple layers of the durable material 111A, B may be applied, the method may include looping the container 10 from a location downstream of the printing step 106 or downstream of the curing step 110 back to a location upstream of the imaging step 102 for further imaging, for example, to verify adequacy of the repair.

There thus has been disclosed an apparatus for and method of repairing a glass container that fully satisfies one or more of the objects and aims previously set forth. The disclosure has been presented in conjunction with several illustrative embodiments, and additional modifications and variations have been discussed. Other modifications and variations readily will suggest themselves to persons of ordinary skill in the art in view of the foregoing discussion. The drawings provided may not necessarily be to scale. The disclosure is intended to embrace all such modifications and variations as fall within the broad scope of the appended claims

## Claims

1. An apparatus (20) for repairing an outer surface (16) of a glass product (10), the apparatus comprising:
an imager (24) positioned to capture one or more images of the glass product;
an image processor (25) in communication with the imager, to process the one or more images of the glass product to identify a repairable portion (18A, 18B) of the glass product; and
a printer (26) in communication with the image processor, to apply a durable material (111A, 111B) to the repairable portion of the glass product.

2. The apparatus of claim 1, further comprising a moveable support (22) for the glass product, wherein the moveable support includes a first portion (31) that is upstream of the imager, a second portion (32) that is downstream of the imager and forked so that the glass product is routed either along a first path (34) between the imager and the printer or along a second path (36) away from both of the imager and the printer, and a third portion (38) that is downstream of the first path of the second portion and extends away from the printer.

3. The apparatus of claim 2, wherein the glass product with the repairable portion is a first glass product, and further comprising a second glass product without any repairable portions and a third glass product that cannot be repaired, and wherein the first and second glass products are routed along the first portion, the first path of the second portion, and the third portion, and wherein the third glass product is routed along the first portion and the second path of the second portion.

4. The apparatus of claim 1, wherein the imager includes a plurality of cameras (30A, 30B) configured to be positioned 360° about the glass product or the imager includes a line-scan camera that captures an image of the glass product during rotation of the glass product.

5. The apparatus of claim 1, wherein the image processor analyzes a degree of wear of the repairable portion and/or a location on the glass product of the repairable portion.

6. The apparatus of claim 1, wherein the printer includes material having an ultraviolet (UV) curable composition and/or wherein the printer is a digital inkjet machine.

7. The apparatus of claim 6, further comprising an ultraviolet (UV) light source (46) within or downstream of the printer and for curing the ultraviolet (UV) curable composition.

8. A method of repairing an outer surface (16) of a glass product (10), the method comprising:
imaging the glass product to capture one or more images of the glass product to identify repairable portion (18A, 18B) of the glass product;
processing the captured one or more images to identify repairable portion of the glass product; and
printing a durable material (111A, 111B) at the repairable portion of the glass product.

9. The method of claim 8, wherein the processing step includes analyzing a degree of wear of the repairable portion, in particular wherein the printing step includes a processor (25) communicating with a printer (26) to send information to the printer about at least one of a degree of wear or a location of the repairable portion.

10. The method of claim 8, wherein the processing step includes analyzing a location on the glass product of the repairable portion.

11. The method of claim 8, further comprising curing the durable material after the printing step, and wherein the material comprises an ultraviolet (UV) curable composition.

12. The method of claim 8, further comprising:
routing the glass product having the repaired portion away from the printer and to be reused.

13. The method of claim 8, wherein the imaging step includes capturing images 360° about the glass product, in particular wherein the imaging step includes capturing the one or more images with one or more cameras (30A, 30B) positioned about the glass product, in particular wherein the imaging step includes using a line-scan camera that captures an image of the glass product during rotation of the glass product or includes a plurality of cameras (30A, 30B) surrounding the glass product.

14. The method of claim 8, wherein the glass product is a glass container, and wherein the repairable portion is selected from the group consisting of a commercial variation, scratch, scuff, chip, crack, and any combination thereof.

15. The method of claim 8, wherein the printing step includes using a digital inkjet machine.

## Patentansprüche

1. Vorrichtung (20) zum Reparieren einer Außenfläche (16) eines Glasprodukts (10), wobei die Vorrichtung umfasst:
einen Bildgeber (24), der so positioniert ist, dass er ein oder mehrere Bilder des Glasprodukts aufnimmt,
einen Bildprozessor (25), der mit dem Bildgeber in Verbindung steht, um das eine oder die mehreren Bilder des Glasprodukts zu verarbeiten und einen reparierbaren Bereich (18A, 18B) des Glasprodukts zu identifizieren, und
einen Drucker (26), der mit dem Bildprozessor in Verbindung steht, um ein langlebiges Material (111A, 111B) auf den reparierbaren Bereich des Glasprodukts aufzubringen.

2. Vorrichtung nach Anspruch 1, ferner umfassend einen bewegbaren Träger (22) für das Glasprodukt, wobei der bewegbare Träger einen ersten Abschnitt (31) umfasst, der dem Bildgeber vorgelagert ist, einen zweiten Abschnitt (32), der dem Bildgeber nachgelagert ist und gegabelt ist, so dass das Glasprodukt entweder entlang eines ersten Weges (34) zwischen dem Bildgeber und dem Drucker oder entlang eines zweiten Weges (36) weg von sowohl dem Bildgeber als auch dem Drucker geführt wird, sowie einen dritten Abschnitt (38), der dem ersten Weg des zweiten Abschnitts nachgelagert ist und sich von dem Drucker hinweg erstreckt.

3. Vorrichtung nach Anspruch 2, wobei das Glasprodukt mit dem reparierbaren Bereich ein erstes Glasprodukt ist, und ferner umfassend ein zweites Glasprodukt ohne reparierbare Bereiche und ein drittes Glasprodukt, das nicht repariert werden kann, und wobei das erste und das zweite Glasprodukt entlang des ersten Abschnitts, entlang des ersten Weges des zweiten Abschnitts und entlang des dritten Abschnitts geführt werden, und wobei das dritte Glasprodukt entlang des ersten Abschnitts und entlang des zweiten Weges des zweiten Abschnitts geführt wird.

4. Vorrichtung nach Anspruch 1, wobei der Bildgeber eine Mehrzahl von Kameras (30A, 30B) umfasst, die derart konfiguriert sind, dass sie über 360° um das Glasprodukt herum angeordnet sind, oder wobei der Bildgeber eine Zeilenscan-Kamera umfasst, die ein Bild des Glasprodukts aufnimmt, während das Glasprodukt gedreht wird.

5. Vorrichtung nach Anspruch 1, wobei der Bildprozessor einen Verschleißgrad des reparierbaren Bereichs und/oder eine Position des reparierbaren Bereichs an dem Glasprodukt analysiert.

6. Vorrichtung nach Anspruch 1, wobei der Drucker ein Material mit einer mittels Ultraviolett (UV) härtbaren Zusammensetzung enthält, und/oder wobei der Drucker eine digitale Tintenstrahldruckmaschine ist.

7. Vorrichtung nach Anspruch 6, ferner umfassend eine Quelle für ultraviolettes (UV) Licht (46) innerhalb des Druckers oder diesem nachgelagert und bestimmt zur Aushärtung der mittels Ultraviolett (UV) härtbaren Zusammensetzung.

8. Verfahren zum Reparieren einer Außenfläche (16) eines Glasprodukts (10), wobei das Verfahren umfasst:
Bildaufnahme des Glasprodukts, um ein oder mehrere Bilder des Glasprodukts aufzunehmen, um einen reparierbaren Bereich (18A, 18B) des Glasprodukts zu identifizieren,
Verarbeiten des einen oder der mehreren aufgenommenen Bilder, um einen reparierbaren Bereich des Glasprodukts zu identifizieren, und
Drucken eines langlebigen Materials (111A, 111B) auf den reparierbaren Bereich des Glasprodukts.

9. Verfahren nach Anspruch 8, wobei der Verarbeitungsschritt die Analyse eines Verschleißgrades des reparierbaren Bereichs umfasst, insbesondere wobei der Druckschritt einen Prozessor (25) einschließt, der mit einem Drucker (26) in Verbindung steht, um dem Drucker Informationen über einen Verschleißgrad und/oder über eine Position des reparierbaren Bereichs zu senden.

10. Verfahren nach Anspruch 8, wobei der Verarbeitungsschritt die Analyse einer Position des reparierbaren Bereichs auf dem Glasprodukt umfasst.

11. Verfahren nach Anspruch 8, weiterhin umfassend das Aushärten des langlebigen Materials nach dem Druckschritt, und wobei das Material eine mittels Ultraviolett (UV) härtbare Zusammensetzung umfasst.

12. Verfahren nach Anspruch 8, ferner umfassend:
Führen des Glasprodukts mit dem reparierten Bereich von dem Drucker hinweg und zur Wiederverwendung.

13. Verfahren nach Anspruch 8, wobei der Bildaufnahmeschritt das Aufnehmen von Bildern über 360° um das Glasprodukt herum umfasst, wobei insbesondere der Bildaufnahmeschritt das Aufnehmen des einen oder der mehreren Bilder mit einer oder mehreren Kameras (30A, 30B) umfasst, die um das Glasprodukt herum angeordnet sind, wobei insbesondere der Bildaufnahmeschritt die Verwendung einer Zeilenscan-Kamera umfasst, die ein Bild des Glasprodukts aufnimmt, während das Glasprodukt gedreht wird, oder eine Mehrzahl von das Glasprodukt umgebenden Kameras (30A, 30B) umfasst.

14. Verfahren nach Anspruch 8, wobei das Glasprodukt ein Glasbehälter ist, und wobei der reparierbare Bereich aus der Gruppe ausgewählt ist, bestehend aus einer kommerziell bedeutsamen Abweichung, einem Kratzer, einer Schramme, einer Absplitterung, einem Riss und einer beliebigen Kombination dieser.

15. Verfahren nach Anspruch 8, wobei der Druckschritt die Verwendung einer digitalen Tintenstrahldruckmaschine umfasst.

## Revendications

1. Appareil (20) pour la réparation d'une surface extérieure (16) d'un produit en verre (10), l'appareil comprenant:
un dispositif d'acquisition d'image (24), positionné de manière à capturer une ou plusieurs images du produit en verre,
un processeur d'image (25) en communication avec le dispositif d'acquisition d'image, pour traiter ladite ou lesdites images du produit en verre afin d'identifier une zone réparable (18A, 18B) du produit en verre, et
une imprimante (26) en communication avec le processeur d'image, pour appliquer un matériau durable (111A, 111B) sur la zone réparable du produit en verre.

2. Appareil selon la revendication 1, comprenant en outre un support mobile (22) pour le produit en verre, le support mobile comprenant une première section (31) en amont du dispositif d'acquisition d'image, une deuxième section (32) en aval du dispositif d'acquisition d'image et bifurquée de sorte que le produit en verre est acheminé soit le long d'un premier trajet (34) entre le dispositif d'acquisition d'image et l'imprimante, soit le long d'un deuxième trajet (36) s'éloignant à la fois du dispositif d'acquisition d'image et de l'imprimante, ainsi qu'une troisième section (38) en aval du premier trajet de la deuxième section et s'étendant à l'écart de l'imprimante.

3. Appareil selon la revendication 2, dans lequel le produit en verre présentant la zone réparable est un premier produit en verre, et comprenant en outre un deuxième produit en verre sans zone réparable et un troisième produit en verre qui ne peut pas être réparé, et dans lequel le premier et le deuxième produit en verre sont acheminés le long de la première section, le long du premier trajet de la deuxième section et le long de la troisième section, et dans lequel le troisième produit en verre est acheminé le long de la première section et le long du deuxième trajet de la deuxième section.

4. Appareil selon la revendication 1, dans lequel le dispositif d'acquisition d'image comprend une pluralité de caméras (30A, 30B) configurées pour être disposées sur 360° autour du produit en verre, ou dans lequel le dispositif d'acquisition d'image comprend une caméra à balayage linéaire qui capture une image du produit en verre pendant la rotation du produit en verre.

5. Appareil selon la revendication 1, dans lequel le processeur d'image analyse un degré d'usure de la zone réparable et/ou une position de la zone réparable sur le produit en verre.

6. Appareil selon la revendication 1, dans lequel l'imprimante contient un matériau présentant une composition durcissable aux ultraviolets (UV), et/ou dans lequel l'imprimante est une imprimante à jet d'encre numérique.

7. Appareil selon la revendication 6, comprenant en outre une source de lumière ultraviolette (UV) (46) située à l'intérieur de l'imprimante ou en aval de celle-ci et destinée à durcir la composition durcissable aux ultraviolets (UV).

8. Procédé de réparation d'une surface extérieure (16) d'un produit en verre (10), le procédé comprenant:
la capture d'image du produit en verre pour acquérir une ou plusieurs images du produit en verre afin d'identifier une zone réparable (18A, 18B) du produit en verre,
le traitement de ladite ou desdites images acquises pour identifier une zone réparable du produit en verre, et
l'impression d'un matériau durable (111A, 111B) sur la zone réparable du produit en verre.

9. Procédé selon la revendication 8, dans lequel l'étape de traitement comprend l'analyse d'un degré d'usure de la zone réparable, en particulier dans lequel l'étape d'impression comprend un processeur (25) en communication avec une imprimante (26) pour envoyer à l'imprimante des informations relatives à un degré d'usure et/ou à une position de la zone réparable.

10. Procédé selon la revendication 8, dans lequel l'étape de traitement comprend l'analyse d'une position de la zone réparable sur le produit en verre.

11. Procédé selon la revendication 8, comprenant en outre le durcissement du matériau durable après l'étape d'impression, et dans lequel le matériau comprend une composition durcissable aux ultraviolets (UV).

12. Procédé selon la revendication 8, comprenant en outre:
l'acheminement du produit en verre présentant la zone réparée à l'écart de l'imprimante et en vue de sa réutilisation.

13. Procédé selon la revendication 8, dans lequel l'étape de capture d'image comprend la capture d'images sur 360° autour du produit en verre, en particulier dans lequel l'étape de capture d'image comprend la capture de ladite ou desdites images au moyen d'une ou de plusieurs caméras (30A, 30B) disposées autour du produit en verre, en particulier dans lequel l'étape de capture d'image comprend l'utilisation d'une caméra à balayage linéaire qui capture une image du produit en verre pendant la rotation du produit en verre, ou comprend une pluralité de caméras (30A, 30B) entourant le produit en verre.

14. Procédé selon la revendication 8, dans lequel le produit en verre est un récipient en verre, et dans lequel la zone réparable est choisie dans le groupe constitué d'une déviation commercialement significative, d'une rayure, d'une éraflure, d'un éclat, d'une fissure et de toute combinaison de celles-ci.

15. Procédé selon la revendication 8, dans lequel l'étape d'impression comprend l'utilisation d'une imprimante à jet d'encre numérique.
